# EUROPÄISCHE PATENTSCHRIFT

(11) **EP 2 405 110 B1**
(45) Veröffentlichungstag und Bekanntmachung des Hinweises auf die Patenterteilung: **02.07.2014**
(21) Anmeldenummer: 11163179.2
(22) Anmeldetag: 20.04.2011
(51) Int. Cl.: F01N 9/00, F01N 11/00, F01N 3/20, F02D 41/00

(54) **Überwachungsvorrichtung für einen Verbrennungsmotor**
Monitoring device for an internal combustion engine
Dispositif de surveillance pour un moteur à combustion

(30) Priorität: 08.07.2010 DE 102010026600
(43) Veröffentlichungstag der Anmeldung: 11.01.2012
(73) Patentinhaber: CLAAS Selbstfahrende Erntemaschinen GmbH, 33428 Harsewinkel (DE)
(72) Erfinder: Hugenroth, Ludger, 48346, Ostbevern (DE); Stickel, Claus-Peter, 48231, Warendorf (DE)

(56) Entgegenhaltungen:
- EP-A1- 1 528 229
- WO-A1-2009/001195
- DE-A1-102006 000 074
- DE-T2- 69 308 602
- JP-A- 2006 283 656
- US-A1- 2010 115 925

## Beschreibung

Verschärfte gesetzliche Vorschriften zum Schadstoffgehalt von Motorabgasen haben erhebliche Entwicklungsanstrengungen der Motorenbauer ausgelöst. Im Wesentlichen werden zwei Entwicklungsansätze verfolgt, zum einen das Sammeln der Schadstoffe in einem Filter, zum anderen ihr fortlaufender Abbau in einem Abgaskatalysator.

In Verfolgung des ersten Ansatzes werden in PKWs mit Dieselmotor seit einiger Zeit regelmäßig Partikelfilter eingebaut, um von dem Dieselmotor emittierte Russpartikel abzufangen. Russpartikel lagern sich in Kapillaren des Filters ab, mit der Folge, dass im Laufe des Betriebs der Druckabfall am Filter zunimmt und der Filter im Extermfall verstopfen kann. Um eine solche Verstopfung zu vermeiden, ist es erforderlich, den Filter von Zeit zu Zeit zu regenerieren, indem die darin abgelagerten Russpartikel verbrannt werden. Um den Ruß zum Abbrennen zu bringen, muss der Filter stark erhitzt werden. Grundsätzlich ist dies möglich durch einen Betrieb des Motors bei hoher Last oder durch eine geeignete Manipulation des Zeitpunkts der Kraftstoffeinspritzung am Motor. So kann zum Beispiel durch eine sehr späte Einspritzung oder durch Einspritzen des Kraftstoffs in einen Zylinder des Motors, nachdem dieser seinen oberen Totpunkt passiert hat und die Zündung des zuvor eingespritzten Kraftstoffs bereits stattgefunden hat, sehr heißes und/oder unverbrannten Kraftstoff enthaltendes Abgas erzeugt werden, das direkt oder durch eine dem Motor nachgeschaltete katalytische Verbrennung den Filter aufheizt.

Wenn der im Filter abgelagerte Ruß in Brand geraten ist, liefert seine Verbrennung selber einen mehr oder weniger großen Teil der Wärme, die zur Aufrechterhaltung der Verbrennung erforderlich ist. Es ist daher wichtig, während einer Filterregenerierung die Energiezufuhr zum Filter von außen so zu regeln, dass im Filter keine Temperaturwerte erreicht werden, bei denen das Filtermaterial zu schmelzen oder zu sintern beginnt. Je kleiner die Abmessungen eines Partikelfilters sind, umso schneller wird die Wärme aus dem Filter an die Umgebung abgegeben. Bei einem großformatigen Filter, wie er zum Beispiel an einem leistungsstarken Motor einer landwirtschaftlichen Maschine wie etwa einem Traktor, einem Mähdrescher, einem Feldhäcksler oder dergleichen zum Einsatz kommt, ist der Wärmeverlust daher relativ gering. Dies ermöglichst zwar einerseits, die Regenerierung mit relativ geringem Einsatz an Kraftstoff in Gang zu setzen, andererseits besteht jedoch ein hohes Risiko, dass die durch die Verbrennung des gespeicherten Rußes freigesetzte Wärme zu einer Überhitzung und Beschädigung des Filters führt. Um eine solche Beschädigung zuverlässig vermeiden zu können, müssen die Bedingungen, unter denen die Regenerierung abläuft, strikt kontrolliert werden, und Störeinflüsse, die zu einer Abweichung der Filtertemperatur nach oben oder nach unten führen können, wie etwa Lastschwankungen des Motors, sind zu vermeiden. Um eine solche strikte Kontrolle zu ermöglichen, ist es gebräuchlich, vorzuschreiben, dass eine Filterregenerierung nur bei leer laufendem Motor erfolgen darf.

Aus dieser Einschränkung folgt, dass der Motor bzw. eine von dem Motor angetriebene Maschine nicht nutzbar ist, während die Regenerierung abläuft¹. Eine zu ungünstiger Zeit stattfindende Regenerierung ist für einen Benutzer der Maschine lästig, da sie zur Arbeitsunterbrechung zwingt. Wenn mehrere Maschinen bei der Bearbeitung einer Aufgabe zusammenarbeiten, zum Beispiel Ernte- und Transportmaschinen beim Abernten eines Feldes, wirkt sich eine Betriebsunterbrechung einer Maschine auch auf die anderen aus und kann zu erheblichen wirtschaftlichen Einbußen führen.

In Verfolgung des zweiten oben erwähnten Ansatzes ist der Vorschlag aufgekommen, die bei der Verbrennung entstehende Menge an Schadstoffen, insbesondere an Stickoxiden, durch Einspritzung eines Ammoniakbildners in den Abgasstrang zu reduzieren, der mit den im Abgas enthaltenen Stickoxiden reagiert. Da diese Technik in der Realisierung wesentlich aufwändiger als die Filterung ist, hat sie bisher auf dem Massenmarkt keine Verbreitung gefunden. Es wird aber damit gerechnet, dass sie bei großen Motoren demnächst unumgänglich werden wird, um die immer strengeren Abgasnormen zu erfüllen. Dabei ergibt sich jedoch das Problem, dass die gegenwärtig bekannten Ammoniakbildner in Form wässriger Harnstofflösungen nicht langzeitstabil sind. Ein Benutzer kann sie daher nicht auf Vorrat lagern, um bei Bedarf den Harnstoffvorrat eines Motors jederzeit nachfüllen zu können. Andererseits existiert keine Vertriebsinfrastruktur, die es erlaubt, in ähnlicher Weise wie bei Motorkraftstoffen kurzfristig auftretenden Bedarf rund um die Uhr an sieben Tagen der Woche zu befriedigen. Eine unvorhergesehene Erschöpfung des Ammoniakbildners kann daher genauso wie ein erschöpfter Filter eine Betriebsunterbrechung des Motors zur Unzeit erforderlich machen.

Aus der DE 693 080602 T2 ist eine Überwachungsvorrichtung gemäß dem Oberbegriff des Anspruches 1 bekannt.

Aufgabe der vorliegenden Erfindung ist, eine Überwachungsvorrichtung für einen Verbrennungsmotor sowie eine landwirtschaftliche Maschine mit einem Verbrennungsmotor zu schaffen, die es erlauben, unvorhergesehene Betriebsunterbrechungen zu vermeiden.

Die Aufgabe wird zum einen gelöst durch eine Überwachungsvorrichtung für wenigstens ein die Abgasqualität eines Verbrennungsmotors beeinflussendes, zur Erreichung einer gewünschten Abgasqualität eine Ressource verbrauchendes Hilfsaggregat, die wenigstens einen Sensor zum Erfassen einer mit der Ressource zusammenhängenden Größe und eine Recheneinheit zum Abschätzen der aktuellen Menge der Ressource anhand der von dem wenigstens einen Sensor erfassten Größe und zum Berechnen der vor Erschöpfung der Filterkapazität verbleibenden Restbetriebskapazität des Verbrennungsmotors umfasst. Anhand der ausgegebenen Restkapazität kann ein Benutzer abschätzen, wann mit einer Betriebsunterbrechung zu rechnen ist, wenn die Ressource nicht rechtzeitig wieder hergestellt wird, und dies bei der Planung von Arbeitsabläufen berücksichtigen. Die Überwachungseinrichtung ist zum Überwachen mehrerer Hilfsaggregate wie etwa eines Partikelfilters und einer Zumessvorrichtung für Ammoniakbildner gleichzeitig ausgelegt. Dann ist zweckmäßigerweise die ausgegebene Restbetriebskapazität die jeweils kleinste von mehreren, anhand verschiedener Ressourcen berechneten Restarbeitskapazitäten.

Im einfachsten Fall kann die Restbetriebskapazität als eine noch verfügbare Menge der Ressource ausgedrückt werden, oder als Verhältnis dieser Menge zur maximalen Menge der Ressource unmittelbar nach ihrer Wiederherstellung. Für einen Benutzer nützlicher jedoch ist es, wenn die Überwachungsvorrichtung eingerichtet ist, die Restbetriebskapazität als eine bis zur Erschöpfung der Ressource verbleibende Betriebszeit des Dieselmotors auszugeben. So kann ein Benutzer bequem erkennen, ob eine Wiederherstellung der Ressource in einer Zeit nötig wird, in der eine Nutzung des Motors beabsichtigt ist, oder nicht.

Wenn der Motor ein Fahrzeug wie etwa einen Traktor, einen Mähdrescher oder dergleichen antreibt, kann es auch zweckmäßig sein, die Restbetriebskapazität des Filters als eine bis zur Erschöpfung der Ressource verbleibende Fahrstrecke anzugeben. Auch dies erleichtert einem Benutzer die Beurteilung, ob die Restbetriebskapazität zur Erledigung einer gegebenen Aufgabe noch ausreicht oder nicht.

Falls das Fahrzeug ein Erntefahrzeug wie etwa ein Mähdrescher, ein Feldhäcksler oder dergleichen ist, kann es auch zweckmäßig sein, die Restbetriebskapazität als eine verbleibende Erntegutmenge oder gar als eine vor der Wiederherstellung noch bearbeitbare Fläche anzugeben. Auch dies erleichtert einem Benutzer die Abschätzung, ob eine gegebenen Fläche vor der Regenerierung noch abgeerntet werden kann, oder ob z.B. die Restbetriebskapazität noch ausreicht, um einen Ernteguttank des Fahrzeugs noch zu füllen und die Wiederherstellung erst durchzuführen, während das Fahrzeug beim Abtanken des vollen Tanks still steht.

Zweckmäßigerweise kann einem Benutzer über eine Benutzerschnittstelle der Überwachungsvorrichtung die Möglichkeit gegeben werden, die Maßeinheit, in der die Restbetriebskapazität ausgegeben werden soll, jeweils entsprechend seinen aktuellen Bedürfnissen auszuwählen.

Zur Verbesserung des Komforts für einen Benutzer kann die Überwachungsvorrichtung eine Schnittstelle aufweisen, über die ein Arbeitsplan, der wenigstens Zeiten der Nutzung bzw. Nichtnutzung des Motors spezifiziert, in die Überwachungsvorrichtung eingebbar ist, und die Überwachungsvorrichtung ist eingerichtet, nicht nur eine gegenwärtige Restbetriebskapazität abzuschätzen, sondern auch die Restbetriebskapazität an zukünftigen Zeitpunkten, nach und/oder während der Abarbeitung des Arbeitsplans, zu prognostizieren und insbesondere abzuschätzen, an welcher Stelle des Arbeitsplans die Ressource voraussichtlich erschöpft sein wird. Dies ermöglicht eine schnelle Beurteilung, ob der eingegebene Arbeitsplan mit der verfügbaren Menge der Ressource erledigt werden kann, bzw. welcher Zeitpunkt zur Wiederherstellung der Ressource zweckmäßig ist.

Die Überwachungsvorrichtung kann den Vorgaben eines eingegebenen Arbeitsplans automatisch Rechnung tragen, indem sie, falls eine prognostizierte Erschöpfung der Ressource in eine in dem Arbeitsplan spezifizierte Zeit der Nutzung fällt, eine Wiederherstellung der Ressource in einer vorhergehenden Zeit der Nichtnutzung veranlasst oder eventuell auch selbst durchführt.

Wenn das Hilfsaggregat ein Partikelfilter, insbesondere ein Abgasfilter des Verbrennungsmotors ist, ist die Ressource zweckmäßigerweise die Speicherkapazität des Partikelfilters. Rechentechnisch ist es zweckmäßig, die Restbetriebskapazität zunächst als eine Partikelmenge zu berechnen, die der Filter noch in der Lage ist, aufzunehmen, bis seine Speicherkapazität erschöpft ist, und diese Restkapazität anhand des in der Vergangenheit abgeschätzten Partikelzustroms in die wie oben erläutert in anderen Einheiten ausgegebene Restkapazität umzurechnen.

Da die zu einem gegebenen Zeitpunkt noch verfügbare Aufnahmekapazität eines Filters schwierig zu messen ist, ist die Recheneinheit zweckmäßigerweise eingerichtet, anhand der von dem wenigstens einen Sensor erfassten Größe den Partikelzustrom zum Filter abzuschätzen und die Restbetriebskapazität durch Integration des Partikelzustroms zu berechnen.

Sofern die Überwachungsvorrichtung dies unterstützt, kann sie gegebenenfalls auch eine vorzeitige Filterregenerierung veranlassen, wenn ein günstiger Zeitraum hierfür zur Verfügung steht.

Zweckmäßigerweise ist eine solche Überwachungsvorrichtung auch eingerichtet, eine Regenerierung des Partikelfilters zu steuern, wenn diese erforderlich ist, d.h. wenn seine Speicherkapazität für Partikel erschöpft ist. Kriterium für die Erschöpfung kann sein, dass das geometrische Fassungsvermögen des Filters erschöpft ist, dass der Druckabfall des hindurchströmenden Abgases einen Grenzwert übersteigt oder dass die gespeicherte Partikelmenge so groß wird, dass die Gefahr einer

Überhitzung beim Abbrennen nicht mehr sicher ausgeschlossen werden kann.

Einer zweiten Ausgestaltung der Erfindung zufolge kann das Hilfsaggregat eine Zumessvorrichtung für einen Ammoniakbildner sein, und die Ressource ist ein Vorrat an Ammoniakbildner.

In diesem Fall ist der wenigstens eine Sensor vorzugsweise ein Füllstandssensor an einem Vorratsbehälter des Ammoniakbildners.

Erfindungsgegenstand ist auch eine landwirtschaftliche Maschine mit einem Dieselmotor, einem Partikelfilter und einer Überwachungsvorrichtung für den Partikelfilter wie oben beschrieben.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Blockdiagramm einer erfindungsgemäßen Überwachungsvorrichtung;
- Fig. 2: ein exemplarisches Anzeigebild auf einem Anzeigeschirm der Überwachungsvorrichtung; und
- Fig. 3: ein Anzeigebild auf einem Anzeigeschirm einer weiterentwickelten Ausgestaltung der Überwachungsvorrichtung.

Die erfindungsgemäße Überwachungsvorrichtung ist in Form eines Mikroprozessorsystems 1 implementiert, das mit diversen Sensoren 2 bis 4 eines landwirtschaftlichen Fahrzeugs wie etwa eines Mähdreschers, eines Feldhäckslers oder dergleichen, mit einem Anzeigeschirm 5 und mit einer Eingabevorrichtung 6 verbunden ist. Die Eingabevorrichtung 6 ist hier schematisch als eine Computertastatur dargestellt; es kann sich aber auch um eine DFÜ-Schnittstelle zum Empfang von Arbeitsplandaten von einem entfernten Computer, um ein Lesegerät für Datenträger, einen Steckplatz für einen USB-Stick oder dergleichen handeln.

Ein Betriebsprogramm des Mikroprozessorsystems 1 umfasst ein Modul 7 zur Berechnung des Partikelausstoßes eines Dieselmotors 8 des Erntefahrzeugs, ausgedrückt als Masse pro Zeiteinheit, in Abhängigkeit von mit Hilfe der am Motor 8 angeordneten Sensoren 2, 3 erfasster Motorbetriebsparameter wie etwa Drehzahl, Kraftstoffzumessung, Einspritzzeitpunkt, Luftdurchsatz, Leistung oder dergleichen. Indem die von dem Modul 7 gelieferte Partikelerzeugungsrate über die seit der letzten Filterregenerierung verstrichene Zeit integriert wird, kann jederzeit die in einem im Abgasstrang des Motors 8 angeordneten Filter 9 aufgefangene Partikelmenge bzw., in Kenntnis der maximalen Partikelaufnahmekapazität des Filters 9, die Restpartikelmenge angegeben werden, die der Filter 9 noch zu speichern in der Lage ist, bevor eine erneute Regenerierung fällig ist.

Einer einfachen Ausgestaltung zufolge ist das Mikroprozessorsystem 1 eingerichtet, diese Restpartikelmenge durch Dividieren durch einen Mittelwert der in der Vergangenheit von dem Modul basierend auf seinerzeit aktuellen Messwerten der Sensoren 2, 3 errechneten Partikelerzeugungsraten in eine Restbetriebszeit des Motors 8 umzurechnen, nach deren Ablauf der Filter 9 voll ist und regeneriert werden muss, und diese Restzeit auf dem Anzeigeschirm 5 anzuzeigen.

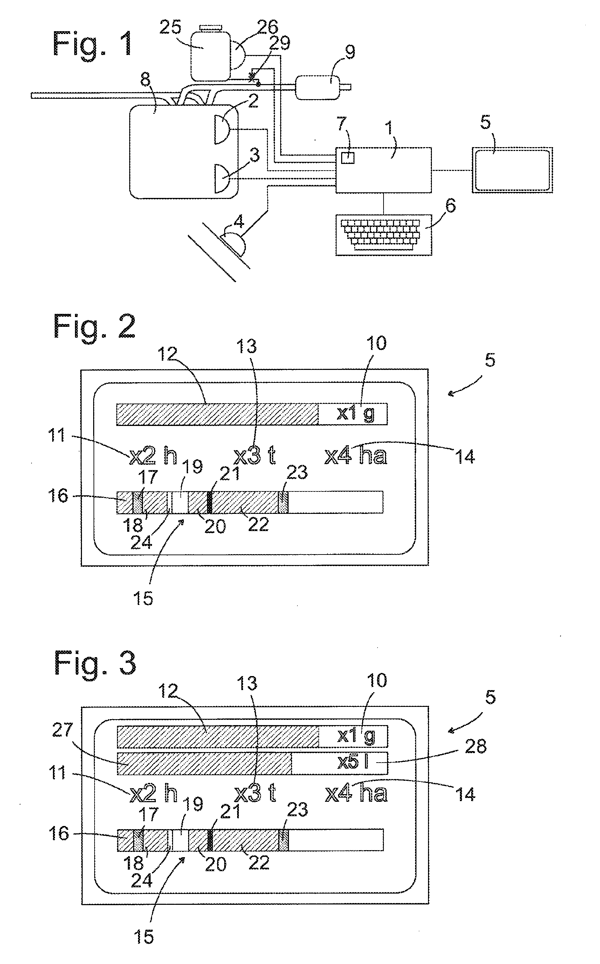

Wie in Fig. 2 gezeigt, kann zum Beispiel auf dem Anzeigeschirm 5 zum einen die Restpartikelmenge in Gramm als Zahlenangabe 10 und die Restlaufzeit in Stunden als Zahlenangabe 11 dargestellt sein. Zusätzlich kann als Balkendiagramm 12 das Verhältnis zwischen Restpartikelmenge oder bereits aufgenommener Partikelmenge und Aufnahmekapazität des Filters graphisch dargestellt sein.

Einer zweckmäßigen Weiterbildung zufolge gibt es unter den Sensoren wenigstens einen, zum Beispiel den Sensor 4, der nicht eine mit der Partikelerzeugung zusammenhängende Betriebsgröße des Motors 8 sondern etwa den Erntegutstrom, ausgedrückt z.B. in Tonnen/Stunde, erfasst. Anhand eines Mittelwerts von in der Vergangenheit von dem Sensor 4 gemessenen Werten des Erntegutstroms rechnet das Mikroprozessorsystem 1 die Restlaufzeit in eine Resterntegutmenge um, die noch vor Erschöpfung der Aufnahmekapazität des Filters eingebracht werden kann, und zeigt diese als eine Zahlenangabe 13 an.

Benachbart zu der Zahlenangabe 13 kann auf dem Anzeigeschirm 5 auch die Restaufnahmekapazität eines Ernteguttanks des Fahrzeugs angegeben werden. So kann ein Benutzer schnell beurteilen, ob die Restkapazität des Filters noch ausreicht, um den Ernteguttank zu füllen und anschließend, wenn das Erntefahrzeug beim Abtanken stillsteht, die Filterregenerierung vorzunehmen. Alternativ kann auch das Mikroprozessorsystem 1 selbst einen solchen Vergleich vornehmen und das Ergebnis zum Beispiel anhand der Farbe der Zahlenangabe 13 dem Fahrer zur Kenntnis bringen.

Anhand der Angabe 13 ist es für einen Fahrer nicht ohne weiteres möglich, zu beurteilen, ob es möglich ist, ein angefangenes Feld fertig zu beernten, bevor eine Regenerierung erforderlich ist. Um diese Beurteilung zu erleichtern, ist einer Weiterbildung zufolge vorgesehen, dass das Mikroprozessorsystem 1 auch Daten zur Fahrzeuggeschwindigkeit sammelt, um aus diesen und der bekannten Breite eines Erntevorsatzes des Fahrzeugs eine vor Erschöpfung der Filterkapazität noch bearbeitbare restliche Fläche umrechnen und als Angabe 14 anzuzeigen.

Es gibt auch mit einem landwirtschaftlichen Fahrzeug zu erledigende Aufgaben, bei denen kein Erntegutstrom entsteht, wie etwa Pflügen, Heu Mähen etc. Auch hier kann es zweckmäßig sein, eine wie oben beschrieben abgeschätzte Restbetriebszeit anhand von zuvor gesammelten Daten zur Fahrzeuggeschwindigkeit und der bekannten Breite des jeweils verwendeten Arbeitswerkzeugs in noch bearbeitbare Fläche umzurechnen.

Die Eingabevorrichtung 6 ist vorgesehen, um die Eingabe eines Arbeitsplans des Fahrzeugs in das Mikroprozessorsystem 1 zu ermöglichen. Ein solcher Arbeitsplan spezifiziert im einfachsten Fall vorgesehene Arbeitszeiten bzw. Nichtarbeitszeiten des Fahrzeugs; einer weiterentwickelten Ausgestaltung zufolge kann differenziert werden zwischen Arbeitszeit, die das Fahrzeug im Straßenverkehr verbringt, und Arbeitszeit im Feldeinsatz. Jede andere Aufschlüsselung des Arbeitsplans nach Zeiten, die unterschiedliche Werte der Partikelerzeugungsrate aufweisen, ist denkbar.

Die Eingabe der Arbeitsplandaten kann manuell, durch Datenfernübertragung von einem externen Computer, mittels eines Datenträgers oder auf beliebige andere Weise erfolgen. Der Arbeitsplan wird auf dem Anzeigeschirm 5 als ein Balkendiagramm 15 dargestellt, bei dem die horizontale Richtung der Zeitachse entspricht und unterschiedlich gefärbte Abschnitte für Arbeitszeiten der Maschine, Ruhezeiten und dergleichen stehen. So zeigt zum Beispiel das Balkendiagramm 15 der Fig. 2 das noch zu erledigende Arbeitsprogramm des gegenwärtigen Tages, wobei der linke Rand des Diagramms 13 dem gegenwärtigen Zeitpunkt entspricht.

Abschnitte 16, 17, 18 an der linken Seite des Diagramms 15 repräsentieren noch im Laufe des Vormittags zu erledigenden Ernteeinsatz, ein daran anschließender weißer Abschnitt 19 eine Mittagspause und Abschnitte 20 bis 23 den Arbeitseinsatz am Nachmittag. Basierend auf zuvor aufgenommenen, für den Ernteeinsatz typischen Messwerten der Sensoren 2, 3 prognostiziert Modul 7 des Mikroprozessorsystems 1 die Partikelerzeugung und ist so in der Lage vorherzusagen, dass im Laufe des Nachmittags eine Filterregenerierung, dargestellt als schwarzer Abschnitt 21, erforderlich werden wird. Diese Regenerierung würde den Arbeitsablauf des Nachmittags stören. Das Mikroprozessorsystem 1 erkennt die Überlappung der Regenerierung mit dem geplanten Ernteeinsatz, überprüft, ob bereits nach Ende des Vormittagseinsatzes 16-18 die im Filter 9 gespeicherte Partikelmenge ausreicht, um einen stabilen Abbrand durchzuführen, und schlägt bejahendenfalls dem Fahrer vor, die Regenerierung in die Mittagspause vorzuziehen, indem es innerhalb des der Mittagspause entsprechenden Abschnitts 19 des Diagramms 15 ein Teilstück 24 markiert. Zweckmäßigerweise wird dieses Teilstück 24 unmittelbar an den letzten Abschnitt 18 des Vormittagseinsatzes anschließend vorgeschlagen, um die nach Durchführung dieses Einsatzes im Filter 9 vorhandene Restwärme für die Regenerierung auszunutzen. Wenn der Fahrer durch eine entsprechende Eingabe an der Vorrichtung 6 den Vorschlag akzeptiert, steuert das Mikroprozessorsystem 1 selbsttätig die Regenerierung zur vorgeschlagenen Zeit.

Locker schraffierte Abschnitte 16, 18, 20, 22 des Balkendiagramms 15 stehen jeweils für geplante Zeiten des Feldeinsatzes, eng schraffierte Abschnitte 17, 23 für geplantes Fahren des Fahrzeugs im Straßenverkehr, zur Verlagerung des Fahrzeugs von einem zu bearbeitenden Feld zum nächsten bzw. zur Heimfahrt. Bei Straßenfahrt können sich die von den Sensoren 2, 3 erfassten Betriebsparameter des Motors deutlich von denen im Feldeinsatz unterscheiden und zu einer abweichenden Partikelerzeugungsrate führen. Derartig unterschiedliche Raten werden bei der Prognose der Partikelmenge im Filter 9 berücksichtigt.

Einer zweiten Ausgestaltung der Erfindung zufolge ist die Recheneinheit 1 mit einem Füllstandsensor 26 verbunden, der an einem Tank 25 für eine Harnstofflösung angeordnet ist. Die Harnstofflösung ist vorgesehen, um mit dem Kraftstoff in den Abgasstrang eingespritzt zu werden und dort Ammoniak freizusetzen, der bei der Verbrennung des Kraftstoffs im Motor gebildete Stickoxide reduziert. Im Folgenden wird nur eine Ausgestaltung beschrieben, bei der die Recheneinheit 1 sowohl den Füllstand des Harnstofftanks 25 und, über ein Dosierventil 29, die Zumessung des Harnstoffs zum Abgas als auch den Filter 9 überwacht; eine vereinfachte Ausgestaltung, bei der die Recheneinheit 1 lediglich den Harnstofftank 25 und die Zumessung überwacht, dürfte anhand der nachfolgenden Beschreibung für den Fachmann offensichtlich sein.

Fig. 3 zeigt in Analogie zu Fig. 2 ein typisches von der Recheneinheit 1 auf dem Anzeigeschirm 5 ausgegebenes Bild. Das auf der Überwachung des Filters 9 basierende Balkendiagramm 12 ist das gleiche wie in Fig. 2 und wird nicht erneut erläutert. Ein weiteres Balkendiagramm 27 veranschaulicht den Füllstand des Harnstofftanks 25, und die von dem Sensor 26 erfasste Restmenge der Harnstofflösung im Tank 25 ist qualitativ als Zahlenangabe 28 angezeigt.

Anhand von in der Vergangenheit erfassten Verbrauchswerten der Harnstofflösung prognostiziert die Recheneinheit 1 die Zeit, die der Motor 8 noch laufen kann, bis der Harnstoffvorrat im Tank 25 erschöpft ist. Diese Zeit wird mit der wie mit Bezug auf das erste Ausführungsbeispiel beschrieben berechneten Zeit bis zur nächsten Filterregenerierung verglichen, und die jeweils kleinere Zeit wird als Zahlenangabe 11 der Restbetriebszeit angezeigt. Basierend auf dieser Restbetriebszeit werden auch die Resterntemenge bzw. Restfläche der Zahlenangaben 13, 14 berechnet.

Es kann vorgesehen werden, auf dem Anzeigeschirm 5 eine Textmeldung oder ein spezielles Symbol anzuzeigen, um dem Fahrer zu signalisieren, ob der die Restbetriebskapazität begrenzende Faktor die Filterkapazität oder der Harnstoffvorrat ist. Denkbar ist aber auch, im Arbeitsplan des Balkendiagramms 15 Abschnitte, die die Notwendigkeit der Wiederherstellung einer Ressource anzeigen, wie etwa den für eine Filterregenerierung stehenden Abschnitt 21, in unterschiedlichen Farben darzustellen, je nach dem, welches die wiederherzustellende Ressource ist.

### Bezugszeichen

- 1: Mikroprozessorsystem
- 2: Sensor
- 3: Sensor
- 4: Sensor
- 5: Anzeigeschirm
- 6: Eingabevorrichtung
- 7: Routine
- 8: Dieselmotor
- 9: Filter
- 10: Zahlenangabe Restpartikelmenge
- 11: Zahlenangabe Restlaufzeit
- 12: Balkendiagramm
- 13: Zahlenangabe Erntegutmenge
- 14: Zahlenangabe Fläche
- 15: Balkendiagramm
- 16-23: Abschnitt
- 24: Teilstück
- 25: Tank
- 26: Füllstandssensor
- 27: Balkendiagramm
- 28: Zahlenangabe Tankinhalt
- 29: Dosierventil

## Patentansprüche

1. Überwachungsvorrichtung für wenigstens ein die Abgasqualität eines Verbrennungsmotors (8) beeinflussendes, zur Erreichung einer gewünschten Abgasqualität eine Ressource verbrauchendes Hilfsaggregat, mit wenigstens einem Sensor (2, 3) zum Erfassen einer mit der Ressource zusammenhängenden Größe und einer Recheneinheit (1) zum Abschätzen der aktuellen Menge der Ressource anhand der von dem wenigstens einen Sensor (2, 3) erfassten Größe, wobei die Recheneinheit (1) ferner eingerichtet ist, eine vor Erschöpfung der Ressource verbleibende Restbetriebskapazität des Verbrennungsmotors (8) zu berechnen und auszugeben, sowie dass die Berechnung der Restbetriebskapazität anhand eines Mittelwertes von in der Vergangenheit erfassten Verbrauchswerten der Ressource erfolgt, **dadurch gekennzeichnet, dass** die Recheneinheit (1) eingerichtet ist, die aktuellen Mengen von wenigstens zwei Ressourcen abzuschätzen, die den abgeschätzten aktuellen Mengen entsprechenden Restbetriebskapazitäten abzuschätzen und die jeweils kleinste abgeschätzte Restbetriebskapazität anzuzeigen.

2. Überwachungsvorrichtung nach Anspruch 1, **dadurch gekennzeichnet, dass** sie eingerichtet ist, die Restbetriebskapazität als eine bis zur Erschöpfung der Ressource verbleibende Betriebszeit des Verbrennungsmotors (11), eine verbleibende Fahrstrecke, falls der Verbrennungsmotor (11)ein Fahrzeug antreibt, oder eine verbleibende Erntegutmenge (13) oder eine restliche bearbeitbare Fläche (14), falls das Fahrzeug ein landwirtschaftliches Arbeitsfahrzeug ist, auszugeben.

3. Überwachungsvorrichtung nach Anspruch 2, **dadurch gekennzeichnet, dass** sie eine Schnittstelle (6) zur Eingabe eines Arbeitsplans aufweist, der wenigstens Zeiten der Nutzung (16-18, 20-23) bzw. der Nichtnutzung (19) des Motors (8) spezifiziert, und eingerichtet ist, die Restbetriebskapazität nach und/oder während der Abarbeitung des Arbeitsplans zu prognostizieren.

4. Überwachungsvorrichtung nach Anspruch 3, **dadurch gekennzeichnet, dass** sie eingerichtet ist, falls eine prognostizierte Erschöpfung der Ressource in eine Zeit der Nutzung (20-23) fällt, eine Wiederherstellung der Ressource in einer vorhergehenden Zeit der Nichtnutzung (19) zu veranlassen.

5. Überwachungsvorrichtung nach einem der vorhergehenden Ansprüche, **dadurch gekennzeichnet, dass** das Hilfsaggregat ein Partikelfilter, insbesondere ein Abgasfilter (9) des Verbrennungsmotors (8) ist, und dass die Ressource die Speicherkapazität des Partikelfilters (9) ist.

6. Überwachungsvorrichtung nach Anspruch 5, **dadurch gekennzeichnet, dass** die Recheneinheit (1) eingerichtet ist, anhand der von dem wenigstens einen Sensor (2, 3) erfassten Größe den Partikelzustrom zum Filter (9) abzuschätzen und die Restbetriebskapazität durch Integration des Partikelzustroms zu berechnen.

7. Überwachungsvorrichtung nach Anspruch 6, **dadurch gekennzeichnet, dass** sie eingerichtet ist, eine Partikelmenge zu berechnen, die der Filter noch in der Lage ist, aufzunehmen, bis seine Speicherkapazität erschöpft ist, und diese Partikelmenge in die ausgegebene Restkapazität (11, 13, 14) anhand des abgeschätzten Partikelzustroms umzurechnen.

8. Überwachungsvorrichtung nach einem der Ansprüche 5 bis 7, **dadurch gekennzeichnet, dass** sie ferner eingerichtet ist, eine Regenerierung des Partikelfilters (9) zu steuern, wenn die Restbetriebskapazität Null ist.

9. Überwachungsvorrichtung nach einem der Ansprüche 1 bis 4, **dadurch gekennzeichnet, dass** das Hilfsaggregat eine Zumessvorrichtung (25, 29) für einen Ammoniakbildner ist und dass die Ressource ein Vorrat an Ammoniakbildner ist.

10. Überwachungsvorrichtung nach Anspruch 9, **dadurch gekennzeichnet, dass** der wenigstens eine Sensor ein Füllstandsensor an einem Vorratsbehälter des Ammoniakbildners ist.

11. Landwirtschaftliche Maschine, insbesondere Erntemaschine, mit einem Verbrennungsmotor (8) und wenigstens einem Hilfsaggregat (9), **gekennzeichnet durch** eine Überwachungsvorrichtung (1-7) nach einem der vorhergehenden Ansprüche.

## Claims

1. A monitoring device for at least one auxiliary assembly which influences the exhaust gas quality of an internal combustion engine (8) and consumes a resource to achieve a desired exhaust gas quality, comprising at least one sensor (2, 3) for detecting a variable related to the resource and a computing unit (1) for estimating the current amount of the resource on the basis of the variable detected by the at least one sensor (2, 3), wherein the computing unit (1) is further adapted to calculate and output a residual operating capacity of the internal combustion engine (8) that remains before exhaustion of the resource, and calculation of the residual operating capacity is effected on the basis of a mean value of resource consumption values detected in the past, **characterised in that** the computing unit (1) is adapted to estimate the current amounts of at least two resources, to estimate the residual operating capacities corresponding to the estimated current amounts, and to display the respectively smallest estimated residual operating capacity.

2. A monitoring device according to claim 1 **characterised in that** it is adapted to output the residual operating capacity as an operating time of the internal combustion engine (8), that remains until exhaustion of the resource, a remaining travel distance if the internal combustion engine (8) drives a vehicle, or a remaining crop material amount (13) or a remaining workable area (14) if the vehicle is an agricultural working vehicle.

3. A monitoring device according to claim 2 **characterised in that** it has an interface (6) for the input of a working plan which specifies at least times of use (16 - 18, 20 - 23) or non-use (19) of the engine (8) and is adapted to prognosticate the residual operating capacity after and/or during implementation of the working plan.

4. A monitoring device according to claim 3 **characterised in that** it is adapted, if a prognosticated exhaustion of the resource occurs in a time of use (20 - 23), to cause restoration of the resource in a preceding time of non-use (19).

5. A monitoring device according to one of the preceding claims **characterised in that** the auxiliary assembly is a particulate filter, in particular an exhaust gas filter (9) of the internal combustion engine (8) and the resource is the storage capacity of the particulate filter (9).

6. A monitoring device according to claim 5 **characterised in that** the computing unit (1) is adapted on the basis of the variable detected by the at least one sensor (2, 3) to estimate the particle feed flow to the filter (9) and to calculate the residual operating capacity by integration of the particle feed flow.

7. A monitoring device according to claim 6 **characterised in that** it is adapted to calculate a particle amount that the filter is still capable of receiving until its storage capacity is exhausted and to convert said particle amount into the outputted residual capacity (11, 13, 14) on the basis of the estimated particle feed flow.

8. A monitoring device according to one of claims 5 to 7 **characterised in that** it is further adapted to control regeneration of the particulate filter (9) when the residual operating capacity is zero.

9. A monitoring device according to one of claims 1 to 4 **characterised in that** the auxiliary assembly is a metering device (25, 29) for an ammonia-forming means and that the resource is a supply of ammonia-forming means.

10. A monitoring device according to claim 9 **characterised in that** the at least one sensor is a filling sensor on a supply container of the ammonia-forming means.

11. An agricultural machine, in particular a harvester, comprising an internal combustion engine (8) and at least one auxiliary assembly (9), **characterised by** a monitoring device (1 - 7) according to one of the preceding claims.

## Revendications

1. Dispositif de surveillance d'au moins un organe auxiliaire, lequel influe sur la qualité des gaz d'échappement d'un moteur à combustion (8) et consomme une ressource pour atteindre une qualité de gaz d'échappement souhaitée, comprenant au moins un capteur (2, 3) pour détecter une grandeur en rapport avec la ressource et une unité de calcul (1) pour estimer la quantité instantanée de la ressource à l'aide de la grandeur détectée par ledit au moins un capteur (2, 3), l'unité de calcul (1) étant en outre conçue pour calculer et délivrer une capacité de fonctionnement restante du moteur à combustion (8) avant épuisement de la ressource, le calcul de la capacité de fonctionnement restante étant effectué à l'aide d'une moyenne de valeurs de consommation de la ressource détectées dans le passé, **caractérisé en ce que** l'unité de calcul (1) est conçue pour estimer les quantités instantanées d'au moins deux ressources, estimer les capacités de fonctionnement restantes correspondant aux quantités instantanées estimées et afficher la plus petite des capacités de fonctionnement restantes estimées.

2. Dispositif de surveillance selon la revendication 1, **caractérisé en ce qu'**il est conçu pour délivrer la capacité de fonctionnement restante sous la forme d'un temps de fonctionnement restant du moteur à combustion (11) jusqu'à l'épuisement de la ressource, d'un parcours restant si le moteur à combustion (11) entraîne un véhicule, ou d'une quantité de produit de récolte restante (13) ou d'une surface restante à traiter (14) si le véhicule est un véhicule de travail agricole.

3. Dispositif de surveillance selon la revendication 2, **caractérisé en ce qu'**il présente une interface (6) pour l'entrée d'un plan de travail, lequel spécifie au moins des périodes d'utilisation (16-18, 20-23) ou de non-utilisation (19) du moteur (8), et est conçu pour prédire la capacité de fonctionnement restante après et/ou pendant l'exécution du plan de travail.

4. Dispositif de surveillance selon la revendication 3, **caractérisé en ce qu'**il est conçu, si un épuisement prédit de la ressource coïncide avec une période d'utilisation (20-23), pour provoquer une reconstitution de la ressource durant une période précédente de non-utilisation (19).

5. Dispositif de surveillance selon l'une des revendications précédentes, **caractérisé en ce que** l'organe auxiliaire est un filtre à particules, en particulier un filtre à gaz d'échappement (9) du moteur à combustion (8), et **en ce que** la ressource est la capacité de stockage du filtre à particules (9).

6. Dispositif de surveillance selon la revendication 5, **caractérisé en ce que** l'unité de calcul (1) est conçue pour estimer l'afflux de particules vers le filtre (9) à l'aide de la grandeur détectée par ledit au moins un capteur (2, 3) et pour calculer la capacité de fonctionnement restante par intégration de l'afflux de particules.

7. Dispositif de surveillance selon la revendication 6, **caractérisé en ce qu'**il est conçu pour calculer une quantité de particules que le filtre est encore en mesure d'absorber avant que sa capacité de stockage ne soit épuisée et pour convertir cette quantité de particules en la capacité restante délivrée (11, 13, 14) à l'aide de l'afflux de particules estimé.

8. Dispositif de surveillance selon l'une des revendications 5 à 7, **caractérisé en ce qu'**il est en outre conçu pour commander une régénération du filtre à particules (9) lorsque la capacité de fonctionnement restante est nulle.

9. Dispositif de surveillance selon l'une des revendications 1 à 4, **caractérisé en ce que** l'organe auxiliaire est un dispositif de mesure (25, 29) pour un agent de formation d'ammoniac et **en ce que** la ressource est un stock d'agent de formation d'ammoniac.

10. Dispositif de surveillance selon la revendication 9, **caractérisé en ce que** ledit au moins un capteur est un capteur de niveau de remplissage d'un réservoir de stockage de l'agent de formation d'ammoniac.

11. Machine agricole, en particulier machine de récolte, équipée d'un moteur à combustion (8) et d'au moins un organe auxiliaire (9), **caractérisée par** un dispositif de surveillance (1-7) selon l'une des revendications précédentes.
